# EUROPÄISCHE PATENTSCHRIFT

(11) **EP 0 944 285 B1**
(45) Veröffentlichungstag und Bekanntmachung des Hinweises auf die Patenterteilung: **30.04.2008**
(21) Anmeldenummer: 99102974.5
(22) Anmeldetag: 15.02.1999
(51) Int. Cl.: H04Q 11/04

(54) **Vorrichtung und Verfahren zum automatischen Aktivieren und Deaktivieren von Leistungsmerkmalen**
Apparatus and method for automatically activating and deactivating services
Dispositif et méthode pour activer et désactiver des services

(30) Priorität: 20.03.1998 DE 19812283
(43) Veröffentlichungstag der Anmeldung: 22.09.1999
(73) Patentinhaber: Deutsche Telekom AG, 53113 Bonn (DE)
(72) Erfinder: Hellenthal, Georg H., 51105 Köln (DE); Dihlmann, Klaus-Dieter, 64839 Münster-Altheim (DE)

(56) Entgegenhaltungen:
- GB-A- 2 303 272
- US-A- 5 546 451

## Beschreibung

Die Erfindung betrifft eine Vorrichtung zum automatischen Aktivieren und Deaktivieren von Leistungsmerkmalen für eine Sprachkommunikation in einer Vermittlungsstelle eines Festnetzes gemäß Anspruch 1 sowie ein Verfahren zur automatischen Aktivierung und Deaktivierung von Leistungsmerkmalen nach Anspruch 6.

Um analoge Telefonanschlüsse im Festnetz für Kunden attraktiver gestalten zu können, werden neben den klassischen Leistungsmerkmalen wie Aufbauen, Führen und Trennen von Verbindungen sogenannte Komfort-Leistungsmerkmale (Advanced Subscriber Services) angeboten. Dazu gehören beispielsweise Anklopfen, Dreierkonferenz, Rückruf bei Besetzt, Sperre und Anrufweiterschaltung. Typischerweise werden diese Komfort-Leistungsmerkmale vor, während oder nach dem Aufbau einer Verbindung über spezielle Tastenfolgen, die der Benutzer an seinem Telefon eingibt, aktiviert bzw. deaktiviert. Während einer bestehenden Verbindung können dann von der zugehörigen Vermittlungsstelle Hinweistöne zum Telefon übertragen werden, die den Nutzer daran erinnern, daß er ein bestimmtes Leistungsmerkmal aktiviert hat. Ist beispielsweise das Komfort-Leistungsmerkmal "Anklopfen" aktiviert, kann während einer bestehenden Verbindung durch einen zum Telefon des Benutzers übertragenen Hinweiston signalisiert werden, daß eine weitere Verbindung für ihn in der Vermittlungsstelle angekommen ist und dort gehalten wird.

Analoge Telefonanschlüsse werden aber nicht nur zur Sprachkommunikation sondern zunehmend auch zur Übertragung von Daten, wie z.B. Text-Daten verwendet. Als technische Ausführungsbeispiele seien hier Fernkopierer und Modems zur Datenübertragung über Personalcomputer genannt.

Analoge Telefonanschlüsse werden aber nicht nur zur Sprachkommunikation sondern zunehmend auch zur Übertragung von Daten, wie z.B. Text-Daten verwendet. Als technische Ausführungsbeispiele seien hier Fernkopierer und Modems zur Datenübertragung über Personalcomputer genannt.

Allerdings können während einer bestehenden Datenübertragung übermittelte Hinweistöne, die ein aktiviertes Komfortleistungsmerkmal für eine Sprachkommunikation anzeigen, die Verbindung zwischen den Datenendeinrichtungen stören oder sogar unterbrechen. Da bisher einmal aktivierte Komfortleistungsmerkmale unabhängig von der Art der Verbindung (Sprachkommunikation oder Datenkommunikation) aktiviert bleiben, sind Nutzer von analogen Telefonanschlüssen daher gezwungen, vor dem Verbindungsaufbau für eine Daten- oder Telefaxübertragung die aktivierten Komfortleistungsmerkmale von ihrem Telefon aus zu deaktivieren und nach einer beendeten Datenübertragung wieder zu aktivieren, um diese wieder nutzen zu können. Bisher ist es nämlich nicht möglich, in Abhängigkeit von der Verbindungsart die Leistungsmerkmale in der Vermittlungsstelle automatisch zu aktivieren oder zu deaktivieren.

Die US 5,546,451 A offenbart eine Anklopf-Unterdrückungseinrichtung, bei der ankommende Verbindungen ausgewertet werden. In einem ersten Modus, bei dem Rufe von einem Telekommunikationsgerät eingeleitet werden, ist die Anklopf-Unterdrückungseinrichtung zunächst nicht in Betrieb. In einem zweiten Modus, bei dem Rufe an einer an der Ünterdrückungseinrichtung angeschlossenen Telekommunikationseinrichtung ankommen, wird eine CWC-Einrichtung aktiviert, um einen Unterdrückungscode zur Vermittlungsstelle zu übertragen. Die Bedingung, unter der eine Deaktivierung von Leistungsmerkmalen erfolgt, sieht vor, dass zunächst geprüft wird, ob ein Rufzeichen von der Vermittlungsstelle angekommen ist. Ferner wird geprüft, ob unter Ansprechen auf das empfangene Rufsignal eine an der Ünterdrückungseinrichtung angeschlossene Telekommunikationeeinrichtung in den aktiven Zustand, das heißt in den Off-Hook-Zustand übergegangen ist. Erst wenn dies der Fall ist, wird ein Steuersignal zur Deaktivierung der Leistungsmerkmale zur Vermittlungsstelle übertragen.

Der Erfindung liegt daher die Aufgabe zugrunde, eine Vorrichtung und ein Verfahren zur Verfügung zu stellen, die eine funktionssichere Datenkommunikation über einen analogen Telefonanschluß ermöglichen, auch wenn KomfortLeistungsmerkmale für eine Sprachkommunikation in der Vermittlungsstelle aktiviert sind.

Der Kerngedanke der Erfindung ist darin zu sehen, vor Beginn eines Verbindungsaufbaus für eine Datenübertragung aktivierte Leistungsmerkmale für eine Sprachkommunikation in der zugeordneten Vermittlungsstelle automatisch zu deaktivieren und vorteilhafterweise nach dem Trennen der Datenverbindung wieder automatisch zu aktivieren. Nach einem Gesichtspunkt der vorliegenden Erfindung wird dies mit den Merkmalen des Anspruchs 1 gelöst.

Dazu weist eine Vorrichtung wenigstens eine erste Schnittstelle zum Anschalten an eine analoge Teilnehmeranschlußeinrichtung aufweist. Über wenigstens eine zweite Schnittstelle ist ein Telefon und über wenigstens eine dritte Schnittstelle eine Datenendeinrichtung, z.B. ein Fernkopierer oder ein Modem anschaltbar. Ferner ist ein an sich bekanntes Koppelfeld vorgesehen, das die zweite und dritte Schnittstelle mit der ersten Schnittstelle verbinden kann. Eine Schnittstellen-Erkennungseinrichtung ist mit der zweiten und dritten Schnittstelle verbindbar und dient dazu, zu erkennen, von welcher Schnittstelle aus ein Verbindungsaufbau gewünscht wird. Eine Sendeeinrichtung, insbesondere ein DTMF (Dual Tone Multifrequence)-Sender hat die Aufgabe, vorbestimmte Steuersignale zur Vermittlungsstelle zum Aktivieren und/oder Deaktivieren der Leistungsmerkmale zu übermittel. Mit der Sendeeinrichtung steht eine Steuereinrichtung in Verbindung, die derart programmiert ist, daß diese vor dem Aufbau einer Datenverbindung die Sendeeinrichtung veranlaßt, Steuersignale zu Vermittlungsstelle auszusenden, die die aktivierten Leistungsmerkmale in der Vermittlungsstelle deaktiviert.

Mit Hilfe dieser Vorrichtung ist es möglich, die für einen analogen Teilnehmeranschluß hinsichtlich einer Sprachkommunikation in einer zugeordneten Vermittlungsstelle aktivierten Komfort-Leistungsmerkmale automatisch zu deaktivieren, wenn über den analogen Telefonanschluß eine Datenverbindung aufgebaut werden soll.

Vorteilhafte Weiterbildungen sind in den Unteransprüchen umschrieben.

Damit nach dem Auslösen bzw. Trennen der Datenverbindung die anfänglich aktivierten Leistungsmerkmale dem Nutzer des analogen Teilnehmeranschlusses für eine Sprachkommunikation wieder zur Verfügung stehen, veranlaßt die Steuereinrichtung die Sendeeinrichtung, Steuersignale zur Vermittlungsstelle auszusenden, die ein Aktivieren der Leistungsmerkmale bewirken.

Die Vorrichtung soll nicht nur teilnehmerbezogene Leistungsmerkmale in der Vermittlungsstelle deaktivieren oder aktivieren, wenn eine Datenverbindung von einer an diese angeschalteten Datenendeinrichtung abgeht, sondern auch, wenn eine Datenverbindung von einer an einem anderen analogen Teilnehmeranschluß angeschalteten Datenendeinrichtung aufgebaut werden soll. Dazu ist in der Vorrichtung eine Einrichtung zum Erkennen von Identifikationssignalen implementiert, die erkennt, ob der Verbindungsaufbau von einem Telefon oder einer Datenendeinrichtung eingeleitet worden ist. Diese Erkennungseinrichtung ist zweckmäßigerweise derart ausgebildet, daß sie die zwischen den Rufsignalen übertragenen Modem- oder CNG (calling-) Töne, das sind die Identifikationssignale eines Modems oder eines Fernkopierers, erkennen kann. Unter Ansprechen auf ein Identifikationssignal legt die Einrichtung zum Erkennen von Identifikationssignalen ein Steuersignal an die Steuereinrichtung, die daraufhin die Sendeeinrichtung veranlaßt, vor dem Durchschalten einer Datenverbindung die Leistungsmerkmale in der ihr zugeordneten Vermittlungsstelle zu deaktivieren.

Zum Erfassen der Auslösung einer Datenverbindung ist ein Schleifenstromdetektor oder eine Besetztto-Erkennungsschaltung vorgesehen, die unter Ansprechen auf ein Trennen der Datenverbindung ein Steuersignal an die Steuereinrichtung anlegt, die wiederum nach dem Auslösen der Datenverbindung die Sendeeinrichtung veranlaßt, Steuersignale zur Aktivierung der Leistungsmerkmale zur zugehörenden Vermittlungsstelle auszusenden.

In der Vorrichtung kann ein Zwischenspeicher zum Speichern wenigstens einer Zielrufnummer einer zu rufenden Datenendeinrichtung vorgesehen sein. Vor dem Deaktivieren der Leistungsmerkmale in der Vermittlungsstelle wird die Zielrufnummer in den Zwischenspeicher gelegt und erst nach der Deaktivierung der Leistungsmerkmale zur Vermittlungsstelle übertragen.

Ferner weist die Vorrichtung einen Detektor zum Erfassen von Quittungssignalen von der Vermittlungsstelle auf, die nach der erneuten Aktivierung der Leistungsmerkmale von der Vermittlungsstelle zur Vorrichtung übertragen werden. Die Steuereinrichtung versetzt unter Ansprechen auf ein Steuersignal des Quittungssignal-Detektors, der den Empfang eines Quittungssignals anzeigt, die Vorrichtung in den Ruhezustand.

Zweckmäßigerweise verfügt die Vorrichtung über eine externe Stromversorgung.

Die Erfindung wird nach einem weiteren Gesichtspunkt durch die Verfahrensschritte gemäß Anspruch 6 gelöst.

Das Verfahren zum automatischen Aktivieren und Deaktivieren von Leistungsmerkmalen für eine Sprachkommunikation in einer Vermittlungsstelle eines analogen Festnetzes, insbesondere mit Hilfe der zuvor umschriebenen Vorrichtung, ist durch folgende Verfahrensschritte gekennzeichnet:
a) Feststellen, ob ein Telefon oder eine Datenendeinrichtung, insbesondere ein Fernkopierer oder ein Modem, einen Verbindungsaufbau wünscht;
b) unter Ansprechen auf einen Verbindungsaufbauwunsch der Datenendeinrichtung werden Steuersignale zum Deaktivieren der Leistungsmerkmale für eine Sprachkommunikation zu einer Vermittlungsstelle vor dem Aufbau der Datenverbindung übertragen;
c) anschließend wird die Datenverbindung hergestellt.

Vorteilhafterweise wird das Beenden der Datenverbindung erkannt und unter Ansprechen auf das Auslösen der Datenverbindung werden Steuersignale zum erneuten Aktivieren der Leistungsmerkmale zur Vermittlungsstelle übertragen.

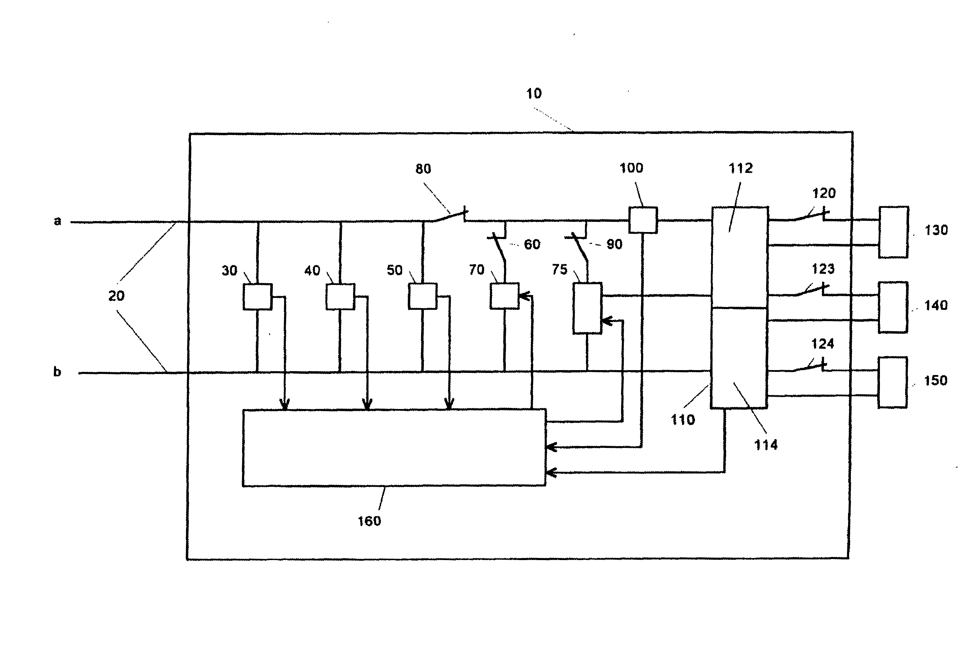

Die Erfindung wird nachstehend anhand eines Ausführungsbeispiels in Verbindung mit der beiliegenden Zeichnung näher erläutert.

Die Figur zeigt eine allgemein mit 10 bezeichnete automatische Leistungsmerkmal-Steuervorrichtung, nachfolgend auch ADSS (Advanced Subscriber Services) Controller genannt, der über eine erste Schnittstelle mit einer analogen Teilnehmeranschlußdose bei einem Kunden angeschaltet ist. Die nicht dargestellte Teilnehmeranschlußdose schließt die a- und b-Adern 20 einer analogen Teilnehmeranschlußleitung ab, die den ADSS-Controller 10 mit einer Vermittlungsstelle verbindet. Der ADSS-Controller 10 weist ferner eine zweite Schnittstelle auf, an die ein Telefon 130 angeschlossen ist. Darüberhinaus sind zwei weitere Schnittstellen vorgesehen, an die jeweils eine Datenendeinrichtung, beispielsweise ein Fernkopierer 150 und ein Modem 140 zum Anschalten eines Personalcomputers (nicht dargestellt) angeschaltet sind. In dem ADSS-Controller 10 ist ein an sich bekannter Rufsignaldetektor 30 implementiert, der die von der Vermittlungsstelle übertragenen Rufsignale detektiert und einer Steuereinrichtung 160 und über das in einem Funktionsblock 110 implementierte Koppelfeld 112 den angeschalteten Endgeräten 130, 140 und 150 zuführen kann. An dieser Stelle sei angemerkt, daß der Funktionsblock 110 beispielhafterweise das Koppelfeld 112 und eine Port-Erkennungslogik 114, deren Funktion weiter unten noch erläutert wird, enthält. Darüberhinaus weist der ADSS-Controller 10 einen Endgeräte-Typendetektor 40 auf, der die von einer an einen anderen Teilnehmeranschluß angeschalteten Datenendeinrichtung kommenden Modem- oder CNG-Tonsignale erkennt und zur Steuereinrichtung 160 weiterleiten kann. Ein Quittungssignaldetektor 50 ist vorgesehen, der Quittungssignale von der Vermittlungsstelle erfassen und an die Steuereinrichtung 160 weiterzuleiten vermag. Wie nachfolgend noch näher erläutert wird, sendet die Vermittlungsstelle Quittungssignale aus, wenn die Leistungsmerkmale für eine Sprachkommunikation aktiviert worden sind. Über einen Schalter 80 kann der ADSS-Controller 10, wie noch näher erläutert wird, eine Schleife über die Teilnehmeranschlußleitung 20 zur Vermittlungsstelle schließen oder gezielt unterbrechen. Der ADSS-Controller 10 weist ferner einen DTMF-Sender 70 auf, der über einen Schalter 60 in die Teilnehmeranschlußleitung 20 eingeschleift werden kann. Die Steuereinrichtung 160 ist sowohl mit dem DTMF-Sender 70 als auch mit den Schaltern 60 und 80 verbunden. Ein Zwischenspeicher 75 ist über das Koppelfeld 112 mit dem Modem 140 oder dem Fernkopierer 150 verbindbar. Mit Hilfe eines Schalters 90 kann der Zwischenspeicher 75 in die Teilnehmeranschlußleitung 20 eingeschleift werden. Der Zwischenspeicher 75 dient dazu, eine vom Modem 140 oder vom Fernkopierer 150 ausgesendete Zielrufnummer einer zu rufenden Datenendeinrichtung zu speichern. Das Telefon 130, das Modem 140 und der Fernkopierer 150 sind jeweils über einen Schalter 120, 123 bzw. 124 mit dem Koppelfeld 112 verbunden. Wie weiter unten noch ausführlicher geschildert wird, werden die Schalter 120, 123 und 124 derart geschaltet, daß immer nur eine Endeinrichtung 130, 140 oder 150 an die Teilnehmeranschlußleitung 20 angeschaltet ist.

Ferner ist eine Halte- und Verzögerungsschaltung (nicht dargestellt) vorgesehen, die dafür sorgt, daß die in dem Zwischenspeicher 75 abgelegte Zielrufnummer erst dann über die Teilnehmeranschlußleitung 20 zur Vermittlungsstelle übertragen wird, wenn die Leistungsmerkmale in der Vermittlungsstelle deaktiviert worden sind.

Zunächst wird die Funktionsweise des ADSS-Controllers 10 bei einer ankommenden Verbindung geschildert.

Es sei das Szenario angenommen, daß ein an einem anderen analogen Teilnehmeranschluß angeschalteter Fernkopierer Daten zum Fernkopierer 150 übertragen möchte. Auch dieser Fernkopierer sei über einen ADSS-Controller an den Teilnehmeranschluß angeschaltet, der in dem vorliegenden Beispiel bereits die für eine Sprachkommunikation aktivierten Leistungsmerkmale in der zugehörenden Vermittlungsstelle deaktiviert hat. Nunmehr sei angenommen, daß die dem ADSS-Controller 10 zugeordnete Vermittlungsstelle ein Rufsignal aussendet. Das Rufsignal wird von dem Rufsignaldetektor 30 erfaßt und zunächst an alle angeschlossenen Endgeräte 130, 140 und 150 sowie an die Steuereinrichtung 160 angelegt. Nach dem Empfang des ersten Ruftons schaltet die Steuereinrichtung 160 den Fernkopiererr 150 und den Modem 140 von dem Rufsignaldetektor 30 ab. Gleichzeitig wird der Endgeräte-Typendetektor 40 aktiviert, der die von dem rufenden Fernkopierer ausgesendeten CNG-Signale empfängt und der Steuereinrichtung 160 signalisiert, daß eine Datenverbindung aufgebaut werden soll. Daraufhin schließt die Steuereinrichtung über die Schalter 80 und 60 die Schleife über die Teilnehmeranschlußleitung 20 zur Vermittlungsstelle und veranlaßt den DTMF-Sender 70, eine zuvor einprogrammierte DTMF-Steuersequenz zur Vermittlungsstelle zu übertragen. Die DTMF-Steuersequenz wird in der Vermittlungsstelle dazu benutzt, die für eine Sprachkommunikation aktivierten Leistungsmerkmale, die dem Teilnehmeranschluß, an dem der ADSS-Controller 10 angeschaltet ist, zugeordnet sind, zu deaktivieren. Neben den DTMF-Steuerseguenzen kann auch ein Hook-Flash zur Steuerung der Vermittlungsstelle übertragen werden. Anschließend wird der Schalter 60 wieder geöffnet und die Verbindung von dem rufenden Fernkopierer über die zugehörigen Vermittlungsstellen, die Teilnehmeranschlußleitung 20, das Koppelfeld 112, den Schalter 124 zum Fernkopierer 150 durchgeschaltet. Die bestehende Datenverbindung kann nach der Datenübertragung entweder von dem Fernkopierer 150 oder von dem rufenden Fernkopierer in Verbindung mit der Vermittlungsstelle ausgelöst werden. Das Auslösen der Datenverbindung wird vom Schleifenstromdetektor 100 erfaßt. Der Schleifenstromdetektor 100 informiert die Steuereinrichtung 160 über das Auslösen der Datenverbindung, woraufhin die Steuereinrichtung 160 über den Schalter 80 eine Schleifenunterbrechung vorbestimmter Dauer erzeugt und anschließend wiederum den Schalter 60 schließt. Danach aktiviert die Steuereinrichtung 160 den DTMF-Sender 70, eine vorprogrammierte Steuerseguenz über die Teilnehmeranschlußleitung 20 zur Vermittlungsstelle zu übertragen, die dafür sorgt, daß in der Vermittlungsstelle die zuvor deaktivierten Leistungsmerkmale wieder aktiviert werden. Dadurch wird gewährleistet, daß bei einer nachfolgenden Sprachverbindung an dem Teilnehmeranschluß dem Benutzer des Telefons 130 wieder alle Leistungsmerkmale, wie z.B. Anklopfen, Dreierkonferenz, Anrufweiterschaltung und dergleichen zur Verfügung stehen. Nach der Aktivierung der Leistungsmerkmale überträgt die Vermittlungsstelle Quittungssignale über die Teilnehmeranschlußleitung 20 zum ADSS-Controller 10, die in dem Quittungssignaldetektor 50 erfaßt werden. Der Quittungssignaldetektor 50 signalsiert den Empfang der Quittungssignale der Steuereinrichtung 160, die daraufhin den ADSS-Controller 10 in den Ruhezustand versetzt. An dieser Stelle sei erwähnt, daß die Energieversorgung des ADSS-Controllers 10 über eine externe, nicht dargestellte Stromversorgung erfolgen kann.

Für den Fall, daß nicht ein Fernkopierer zum Fernkopierer 150 eine Datenverbindung aufbauen will, sondern daß eine normale Sprachkommunikation von einem rufenden Teilnehmer zum Telefon 130 aufgebaut werden soll, erkennt der Endgeräte-Typendetektor 40 das Fehlen eines Modem- oder CNG-Tonsignals innerhalb des Rufsignals, woraufhin die Steuereinrichtung die ankommende Verbindung direkt zum Telefon 130 durchschaltet.

Es wird nunmehr die Funktionsweise des ADSS-Controllers 10 bei einer abgehenden Verbindung erläutert.

Bei einer abgehenden Verbindung ist bei diesem Ausführungsbeispiel immer nur das Endgerät 130, 140 oder 150 mit dem Koppelfeld 112 verbunden, das einen Verbindungsaufbau wünscht. Das folgende Szenario geht davon aus, daß über das Modem 140, an dem beispielsweise ein Personalcomputer angeschlossen ist, eine Datenverbindung zu einem, an einem anderen analogen Teilnehmeranschluß angeschalteten Personalcomputer aufgebaut werden soll. In dem Augenblick, zu dem das Modem 140 einen Datenverbindungsaufbau wünscht, öffnet die Steuereinrichtung die Schalter 120 und 124, die das Telefon 130 bzw. den Fernkopierer 150 von dem Koppelfeld 112 trennen. Anschließend überträgt der Personalcomputer über den Modem 140 die Zielrufnummer des zu rufenden Personalcomputers über das Koppelfeld 112 in den Zwischenspeicher 75. Eine beispielsweise in dem Koppelfeld 112 implementierte, an sich bekannte Port-Erkennungslogik 114 ist derart ausgebildet, daß sie feststellen kann, welches Endgerät 130, 140 oder 150 einen Verbindungsaufbau wünscht. Im vorliegenden Beispiel erkennt die Port-Erkennungslogik 114, daß der Personalcomputer über den Modem 140 eine Datenverbindung aufbauen möchte. Dies signalisiert die Port-Erkennungslogik 114 an die Steuereinrichtung 160, die daraufhin über den Schalter 60 den DTMF-Sender 70 in die Teilnehmeranschlußleitung 20 einschleift. Ferner aktiviert die Steuereinrichtung 160 den DTMF-Sender 70, die zuvor programmierte DTMF-Steuersequenz zur Vermittlungsstelle zu übertragen. Die DTMF-Steuersequenz sorgt dafür, die für eine Sprachkommunikation aktivierten Leistungsmerkmale zu deaktivieren. Im Anschluß daran wird der Schalter 60 wieder geöffnet und der Schalter 90 geschlossen, über den der Zwischenspeicher 75 in die Teilnehmeranschlußleitung 20 eingeschleift wird. Die Steuereinrichtung 160 aktiviert den Zwischenspeicher 75, die zuvor von dem Modem 140 eingegebene Zielrufnummer über die Teilnehmeranschlußleitung 20 zur Vermittlungsstelle zu übertragen. Unter Auswertung der Zielrufnummer baut die Vermittlungsstelle in Verbindung mit weiteren Vermittlungsstellen eine Datenverbindung zum gerufenen Personalcomputer auf. Die Leistungsmerkmale bleiben in der Vermittlungsstelle während der gesamten Datenverbindung deaktiviert. Wird die bestehende Datenverbindung wieder getrennt, so wird dieser Zustand vom Schleifenstromdetektor 100 erkannt und der Steuereinrichtung 160 mitgeteilt. Die Steuereinrichtung 160 erzeugt zunächst über den Schalter 80 eine Schleifenunterbrechung vorbestimmter Dauer und schleift anschließend über den Schalter 60 den DTMF-Sender 70 in die Teilnehmeranschlußleitung 20 ein. Anschließend sendet der DTMF-Sender 70 die zuvor Programmierte DTMF-Steuersequenz zur Vermittlungsstelle, um die Leistungsmerkmale wieder zu aktivieren. Damit stehen dem Benutzer des Telefons 130 die vor der Herstellung der Datenverbindung aktivierten Leistungsmerkmale wieder zur Verfügung. Nach der Aktivierung der Leistungsmerkmale überträgt die Vermittlungsstelle Quittungssignale zum ADSS-Controller 10, die vom Quittungssignaldetektor 50 erkannt und zur Steuereinrichtung 60 weitergeleitet werden, die daraufhin den ADSS-Controller 10 in den Ruhezustand versetzt.

### Bezugszeichenliste:

- 10: ADSS-Controller
- 20: Teilnehmeranschlußleitung
- 30: Rufsignaldetektor
- 40: Endeinrichtungs-Tvpendetektor
- 50: Quittungssignaldetektor
- 60: Schalter
- 70: DTMF-Sender
- 75: Zwischenspeicher
- 80, 90, 120, 123, 124: Schalter
- 100: Schleifenstromdetektor
- 110: Funktionsblock
- 112: Koppelfeld
- 114: Port-Erkennungslogik
- 130: Telefon
- 140: Modem
- 150: Fernkopierer
- 160: Steuereinrichtung

## Patentansprüche

1. Vorrichtung zum automatischen Deaktivieren von Leistungsmerkmalen für eine Sprachkommunikation in einer Vermittlungsstelle eines analogen Festnetzes umfassend:
- wenigstens eine erste Schnittstelle zum Anschalten an eine analoge Teilnehmeranschlußeinrichtung (20), die die Vorrichtung mit der Vermittlungsstelle verbindet,
- wenigstens eine zweite Schnittstelle zum Anschalten eines Telefons (130),
- wenigstens eine dritte Schnittstelle zum Anschalten einer Datenendeinrichtung (140, 150),
- ein mit der zweiten und dritt Schnittstelle verbindbares Koppelfeld (112),
- einen mit der ersten Schnittstelle verbindbaren Endgeräten-Typendetektor (40) zum ankommender Signale von einer an einen anderen Teilnehmeranschluß angeschalteten Datenendeinrichtung;
- eine mit der zweiten und dritten Schnittstelle verbindbare Schnittstellen-Erkennungseinrichtung (114) zum Erkennen eines von der zweiten oder dritten Schnittstelle ausgehenden Verbindungsaufbauwunsches,
- eine mit der ersten Schnittstelle verbindbare Sendeeinrichtung (70) zum Aussenden von Steuersignalen zur Vermittlungsstelle zum Aktivieren und Deaktivieren der Leistungsmerkmale
- und eine mit der Sendeeinrichtung, dem Endgeräten-Typendetektor (40) und der Schnittstellen-Erkennungseinrichtung (114) verbundene Steuereinrichtung (160) zum Veranlassen der Sendeeinrichtung (70) vor dem Aufbau einer Datenverbindung Steuersignale zur Deaktivierung der Leistungsmerkmale auszusenden, wenn der Endgeräten-Typendetektor (40) bzw. die Schnittstellen-Erkennungseinrichtung (114) der Steuereinrichtung (160) signalisiert, dass eine ankommende bzw. eine abgehende Datenverbindung aufgebaut werden soll.

2. Vorrichtung nach Anspruch 1, daß die Steuereinrichtung derart programmiert ist, daß diese nach dem Auslösen der Datenverbindung die Sendeeinrichtung (70) veranlaßt, Steuersignale zur automatischen Aktivierung der Leistungsmerkmale zur Vermittlungsstelle auszusenden.

3. Vorrichtung nach Anspruch 1 oder 2,
**gekennzeichnet durch**
eine Einrichtung zum Erkennen von Identifikationssignalen einer Datenendeinrichtung, die an einer entfernten Teilnehmeranschlußeinrichtung angeschaltet,
einen Schleifenstromdetektor (100) zum Erfassen der Auslösung einer Datenverbindung, und einen Rufsignaldetektor (30).

4. Vorrichtung nach einem der Ansprüche 1 bis 3,
**gekennzeichnet durch**
einen Zwischenspeicher (75) zum Speichern wenigstens einer Zielrufnummer einer zu rufenden Datenendeinrichtung, wobei die Übertragung der Zielrufnummer zur Vermittlungsstelle erst nach der Deaktivierung der Leistungsmerkmale erfolgt.

5. Vorrichtung nach einem der Ansprüche 1 bis 4,
**gekennzeichnet durch**
einen Detektor zum Erfassen von Quittungssignalen von der Vermittlungsstelle nach der Aktivierung der Leistungsmerkmale und eine externe Stromversorgung,
wobei die Steuereinrichtung unter Ansprechen auf ein Ausgangssignal des Quittungssignal-Detektors die Vorrichtung in den Ruhezustand versetzt.

6. Verfahren zum automatischen Deaktivieren von Leistungsmerkmalen für eine Sprachkommunikation in einer Vermittlungsstelle eines analogen Festnetzes mit Hilfe einer Vorrichtung nach einem der Ansprüche 1 bis 5 mit folgenden Verfahrensschritten:
a) Feststellen, ob mit einen Telefon (130) oder mit einer Datenendeinrichtung (140, 150) ein Verbindungsaufbau gewünscht wird;
b) unter Ansprechen auf einen Verbindungsaufbauwunsch mit einer Datenendeinrichtung (140, 150)werden Steuersignale zum Deaktivieren der Leistungsmerkmale für eine Sprachkommunikation zu einer Vermittlungsstelle vor dem Aufbau der Datenverbindung übertragen;
c) Herstellen der Datenverbindung

7. Verfahren nach Anspruch 6, **dadurch gekennzeichnet, daß** nach Ausführung des Schrittes c) folgende Schritte durchgeführt werden:
d) Erkennen eines Auslösens der Datenverbindung;
e) unter Ansprechen auf das Auslösen der Datenverbindung werden Steuersignale zum erneuten Aktivieren der Leistungsmerkmale zur Vermittlungsstelle übertragen.

8. Verfahren nach Anspruch 6 oder 7,
**dadurch gekennzeichnet, daß**
bei einer abgehenden Datenverbindung der Schritt 6.b) folgende Schritte umfaßt:
die Zielrufnummer einer zu rufenden Datenendeinrichtung wird für eine vorbestimmte Zeit zwischengespeichert und nach dem Deaktivieren der Leistungsmerkmale zur Vermittlungsstelle übertragen.

## Claims

1. Device for automatically deactivating performance parameters for a voice communication in an exchange of an analog fixed network, comprising:
- at least one first interface for connecting to an analog subscriber terminal device (20), which connects the device to the exchange,
- at least one second interface for connecting to a telephone (130),
- at least one third interface for connecting to a data terminal device (140, 150),
- a switching unit (112) that can be connected to the second and third interfaces,
- a terminal device type detector (40), which can be connected to the first interface, for detecting incoming signals from a data terminal device connected to another subscriber line,
- an interface detection device (114), which can be connected to the second and third interfaces, for detecting a connection setup request originating from the second or third interface,
- a transmitting device (70), which can be connected to the first interface, for transmitting control signals to the exchange to activate and deactivate the performance parameters,
- and a control unit (160), connected to the transmitting device, the terminal device type detector (40), and the interface detection device (114), for causing the transmitting device (70) to transmit control signals to deactivate the performance parameters before setup of a data connection in the event that the terminal device type detector (40) or the interface detection device (114) signals the control unit (160) that an incoming or outgoing data connection is to be set up.

2. Device according to claim 1, **characterized in that** the control unit is programmed in such a way that, after initiating the data connection, it causes the transmitting device (70) to transmit control signals to the exchange for automatic activation of the performance parameters.

3. Device according to claim 1 or 2,
**characterized by**
a device for detecting identification signals from a data terminal device connected to a remote subscriber terminal device,
by a loop current detector (100) for detecting the initiation of a data connection, and by a ring signal detector (30).

4. Device according to any one of claims 1 through 3,
**characterized by**
a buffer (75) for storing at least one destination subscriber number of a data terminal device to be called,
wherein the transmission of the destination subscriber number to the exchange takes place only after deactivation of the performance parameters.

5. Device according to any one of claims 1 through 4,
**characterized by**
a detector for detecting acknowledgement signals from the exchange after activation of the performance parameters and
an external power supply,
wherein the control unit places the device in the inactive state in response to an output signal from the acknowledgement signal detector.

6. Method for automatically deactivating performance parameters for a voice communication in an exchange of an analog fixed network with the aid of a device according to any one of claims 1 through 5 having the following method steps:
a) determining whether setup of a connection to a telephone (130) or to a data terminal device (140, 150) is requested;
b) in response to a request to set up a connection with a data terminal device (140, 150), control signals for deactivating the performance parameters for a voice communication are transmitted to an exchange before setup of the data connection;
c) establishment of the data connection.

7. Method according to claim 6, **characterized in that** the following steps are performed after the performance of step c):
d) detection of the release of the data connection;
e) in response to the detection of the release of the data connection, control signals to reactivate the performance parameters are transmitted to the exchange.

8. Method according to claim 6 or 7,
**characterized in that**
in the case of an outgoing data connection, step 6.b) includes the following steps:
The destination subscriber number of a data terminal device to be called is buffered for a predetermined time and is transmitted to the exchange following deactivation of the performance parameters.

## Revendications

1. Dispositif de désactivation automatique de facilités pour une communication vocale dans un centre de commutation d'un réseau fixe analogique comprenant :
- au moins une première interface pour la connexion à un équipement d'abonné analogique (20) reliant le dispositif au centre de commutation,
- au moins une deuxième interface pour la connexion d'un téléphone (130),
- au moins une troisième interface pour la connexion d'un équipement terminal de traitement de données (140, 150),
- une matrice de commutation (112) apte à être reliée à la deuxième et à la troisième interface,
- un détecteur de type d'équipement terminal (40) apte à être relié à la première interface pour la reconnaissance de signaux entrants d'un équipement terminal de traitement de données connecté à un autre équipement d'abonné,
- un système de détection d'interface (114) apte à être relié à la deuxième et à la troisième interface pour la reconnaissance d'une requête d'établissement de liaison provenant de la deuxième ou de la troisième interface,
- un émetteur (70) apte à être relié à la première interface pour l'émission de signaux de commande d'activation et de désactivation des facilités en direction du centre de commutation,
- et une unité de commande (160) reliée à l'émetteur, au détecteur de type d'équipement terminal (40) et au système de détection d'interface (114) pour amener l'émetteur (70) à émettre des signaux de commande de désactivation des facilités avant l'établissement d'une liaison de données, si le détecteur de type d'équipement terminal (40) ou le système de détection d'interface (114) signale à l'unité de commande (160) qu'une liaison de données entrante ou sortante doit être établie.

2. Dispositif selon la revendication 1, **caractérisé en ce que** l'unité de commande est programmée de manière à amener l'émetteur (70), après le déclenchement de la liaison de données, à émettre des signaux de commande d'activation automatique des facilités en direction du centre de commutation.

3. Dispositif selon l'une des revendications 1 ou 2,
**caractérisé par**
une installation de reconnaissance de signaux d'identification d'un équipement terminal de traitement de données connectée à une ligne d'abonné distante, un détecteur de courant de boucle (100) pour la détection du déclenchement d'une liaison de données et un détecteur de signal d'appel (30).

4. Dispositif selon l'une des revendications 1 à 3,
**caractérisé par**
une mémoire tampon (75) pour le stockage d'au moins un numéro d'appel cible d'un équipement terminal de traitement de données à appeler, la transmission du numéro d'appel cible au centre de commutation n'intervenant qu'après la désactivation des facilités.

5. Dispositif selon l'une des revendications 1 à 4,
**caractérisé par**
un détecteur pour la détection de signaux d'accusé de réception du centre de commutation après l'activation des facilités et une alimentation électrique externe, l'unité de commande mettant le dispositif à l'état de repos en réponse à un signal de sortie du détecteur de signal d'accusé de réception.

6. Procédé de désactivation automatique de facilités pour une communication vocale dans un centre de commutation d'un réseau fixe analogique à l'aide d'un dispositif selon l'une des revendications 1 à 5, comprenant les étapes suivantes :
a) vérification de la présence d'une requête d'établissement de liaison émanant d'un téléphone (130) ou d'un équipement terminal de traitement de données (140, 150) ;
b) en réponse à une requête d'établissement de liaison avec un équipement terminal de traitement de données (140, 150), transmission de signaux de commande de désactivation des facilités pour une communication vocale à un centre de commutation avant l'établissement de la liaison de données ;
c) établissement de la liaison de données.

7. Procédé selon la revendication 6, **caractérisé en ce que** l'étape c) est suivie des étapes suivantes :
d) reconnaissance d'un déclenchement de la liaison de données ;
e) en réponse au déclenchement de la liaison de données, transmission de signaux de commande de réactivation des facilités au centre de commutation.

8. Procédé selon l'une des revendications 6 ou 7,
**caractérisé en ce que**, dans le cas d'une liaison de données sortante, l'étape 6b) comprend les étapes suivantes :
le numéro d'appel cible d'un équipement terminal de traitement de données à appeler est stocké dans une mémoire tampon pour une durée prédéterminée et transmis au centre de commutation après la désactivation des facilités.
